# NOUVEAU FASCICULE DE BREVET EUROPEEN

(11) **EP 1 629 060 B2**
(45) Date de publication et mention de la décision concernant l'opposition: **05.09.2012**
(45) Mention de la délivrance du brevet: 07.03.2007
(21) Numéro de dépôt: 04767207.6
(22) Date de dépôt: 28.05.2004
(51) Int. Cl.: C09J 103/00

(54) **UTILISATION D'UN AMIDON DE LEGUMINEUSE DANS UNE COMPOSITION ADHESIVE POUR ETIQUETAGE**
VERWENDUNG EINER LEGUMINÖSEN STÄRKE IN ETIKETTIERUNGSKLEBSTOFF
USE OF A LEGUMINOUS STARCH IN AN ADHESIVE LABELING COMPOSITION

(30) Priorité: 30.05.2003 FR 0306584
(43) Date de publication de la demande: 01.03.2006
(73) Titulaire: Roquette Frères, 62136 Lestrem (FR)
(72) Inventeur: MENTINK, Léon, F-59100 Roubaix (FR); TRIPIER, Jacques, F-62122 Labeuvrière (FR)
(74) Mandataire: Cabinet Plasseraud
(86) Numéro de dépôt international: PCT/FR2004/001331
(87) Numéro de publication internationale: WO 2004/108853

(56) Documents cités:
- EP-A- 0 511 916
- WO-A-03/029378
- WAJIRAS. RATNAYAKE &AL: "Pea starch: Composition, Structure and Properties - A Review" STARCH/STÄRKE, vol. 54, 2002, pages 217-234, XP002269066 Weinheim DE

## Description

La présente invention a pour objet l'utilisation d'un amidon de légumineuse dans une composition adhésive pour étiquetage.

Elle vise tout particulièrement l'utilisation d'un tel amidon dans une colle aqueuse destinée aux opérations d'étiquetage effectuées sur des bouteilles, notamment en verre.

Elle concerne également l'utilisation conjointe, dans le domaine précité de l'étiquetage, d'un amidon de légumineuse et d'au moins un autre polymère d'origine naturelle, de nature polysaccharidique ou protéinique.

La mise en oeuvre de matière d'origine naturelle dans la préparation d'adhésifs pour étiquetage est largement décrite et exploitée industriellement depuis des décennies. C'est notamment le cas des colles aqueuses à base de caséine et/ou de matières amylacées destinées à apposer des étiquettes en papier sur des supports en verre.

De manière générale, un adhésif pour étiquetage doit répondre à l'ensemble des critères a) à i) ci-dessous :
a) posséder des propriétés rhéologiques générales adaptées aux opérations unitaires précédant le processus proprement dit de collage entre étiquette et support et notamment adaptées aux procédés et dispositifs de plus en plus rapides et performants de préparation, de transport et de dépose des colles, de positionnement des étiquettes sur leurs supports et d'embouteillage.
   Ces propriétés rhéologiques adaptées doivent pouvoir être obtenues pour des adhésifs présentant des matières sèches relativement élevées, i.e supérieures à 40 % tout en présentant les viscosités souhaitées, par exemple comprises entre 20 000 et 150 000 mPa.s (à 25°C) pour des colles destinées à l'étiquetage de bouteilles de verre.
b) posséder en particulier des propriétés suffisantes de « tack », i.e une capacité suffisante, avant toute perte significative en eau de l'adhésif initiant le phénomène de collage à proprement parler, à maintenir assemblés les deux substrats (étiquette et support) dès qu'ils sont posés l'un sur l'autre.
   Ce « tack » minimum doit, par exemple, permettre d'éviter qu'une étiquette en papier qui vient d'être apposée sur une bouteille en verre ne glisse le long de cette dernière. Ce résultat doit être obtenu aussi bien sur une bouteille dont la surface est humide que sèche.
c) posséder en particulier une texture dite « courte », i.e une texture assurant une distribution efficace et propre de la colle, y compris à grandes vitesses, et notamment limitant la formation de « filaments », de bavures et/ou de projections, sources de salissures sur la machine à étiqueter.
d) développer, après positionnement de l'étiquette sur son support, puis conserver des propriétés adhésives suffisantes et ce, dans tous types d'environnements. L'adhésif doit notamment posséder une bonne tenue à l'eau, y compris à l'eau de condensation. Il est fréquent que des bouteilles (de vin, champagne, bière, ...) soient placées dans un réfrigérateur, un seau à glace ou dans de l'eau froide en vue de refroidir leur contenu. Il est alors essentiel, y compris d'un point de vue esthétique, que l'étiquette ne se décolle pas de son support dans un tel environnement.
e) permettre, en vue des opérations de plus en plus fréquentes de réutilisation ou de recyclage des articles en verre ou plastique, le décollement de l'étiquette dans des conditions simples et peu coûteuses et ce, sans laisser de traces ou de résidus sur lesdits articles. L'adhésif doit notamment être aisément et totalement éliminable de la surface de l'article par un traitement classique de lavage à chaud, éventuellement en bain alcalin.
f) posséder des caractéristiques organoleptiques (dont transparence, couleur, odeur) acceptables tant pour le préparateur puis l'applicateur (embouteilleur par exemple) de l'adhésif que pour les manipulateurs ou utilisateurs successifs de l'article étiqueté mis dans le commerce.
g) conserver au stockage, si possible pendant au moins plusieurs mois, les caractéristiques rhéologiques générales ou particulières, les caractéristiques adhésives, les possibilités d'élimination et les caractéristiques organoleptiques telles que mentionnées aux points a) à f) ci-avant.
h) présenter une absence d'innocuité et une bonne biodégradabilité, notamment en regard des réglementations toujours plus contraignantes en termes de protection de l'homme et de son environnement.
i) présenter une composition la plus simple et la plus « naturelle » possible et un prix de revient le moins élevé possible.

Il apparaît cependant que tant la caséine que les matières amylacées ne permettent pas toujours de répondre à l'ensemble des critères a) à i)

La caséine est une protéine d'origine animale (protéine extraite du lait) qui est soluble en milieu basique et qui a la propriété de se viscosifier de façon très importante au refroidissement. Ceci rend ce polymère particulièrement d'intérêt dans les opérations d'étiquetage sur verre à la fois froid et humide. Du fait de la thermoréversibilité de ce phénomène, la caséine est en outre relativement facilement éliminable par lavage à chaud.

Par contre, la caséine présente les inconvénients suivants :
- mauvaise adaptation aux opérations d'étiquetage sur verre chaud (bouteilles pasteurisées par exemple) du fait justement de la forte dépendance de sa viscosité aux conditions de température,
- nécessité d'un lavage en milieu basique en vue des opérations de recyclage des bouteilles et autres articles,
- odeur forte caractéristique et coloration prononcée,
- prix élevé, notamment en regard de celui des matières amylacées, et sujet à d'importantes fluctuations.

Les matières amylacées présentent globalement les avantages d'un coût relativement faible et stable, d'une facilité d'élimination à l'eau et de propriétés organoleptiques appropriées.

Parmi ces matières amylacées, les amidons dits « riches en amylopectine » ou « waxy » confèrent tout particulièrement aux colles dans lesquelles ils sont introduits une très bonne stabilité au stockage et, par modification chimique, une texture « courte » telle que définie précédemment. C'est par exemple, le cas du produit dénommé « DEXYLOSE^{®} I 231 », conçu et commercialisé par la Demanderesse.

Cependant, d'une manière générale, les colles à base de matières amylacées présentent les inconvénients suivants :
- manque de « tack » sur support froid et/ou humide, et,
- tenue à l'eau médiocre.

Les polymères précités (caséine, matières amylacées) ne permettent donc pas toujours de disposer d'adhésifs remplissant l'ensemble des critères a) à i) précités.

L'un des problèmes liés à l'usage de ces polymères dans les adhésifs pour étiquetage consiste notamment à obtenir simultanément des caractéristiques de bonne tenue à l'eau (cf. critère d) susmentionné) et d'élimination aisée par simple lavage à l'eau chaude (cf. critère f) susmentionné), ces caractéristiques pouvant être considérées comme antinomiques.

Aux fins d'obtenir un compromis acceptable entre ces caractéristiques, il a été proposé des adhésifs aqueux associant amidons et résines synthétiques de type sels d'ammonium de copolymères styrène-anhydride maléïque. De telles résines, peu biodégradables, génèrent des problèmes d'environnement, en particulier au niveau des eaux de lavage des bouteilles recyclées. En outre, comme souligné dans le brevet US 4,336,166, ces adhésifs ne présentent pas les caractéristiques souhaitées de rhéologie et de stabilité. A cet effet, ledit brevet propose de substituer lesdits sels d'ammonium par des sels de zinc des mêmes résines styrène-anhydride maléique.

Cependant, les compositions aqueuses préconisées dans ce brevet US 4,336,166 sont en pratique :
- relativement complexes car contenant également, en particulier, de la bentonite et un système plastifiant à base de benzoates de glycols,
- relativement coûteuses et peu biodégradables du fait de la proportion relativement élevée (3 à 20 % en sec/sec) en émulsion de résine et de la proportion relativement faible (35 % au maximum en sec/sec) en amidon(s).

D'autres solutions ont été proposées en vue d'améliorer les caractéristiques rhéologiques et de stabilité de colles aqueuses destinées à l'étiquetage d'articles en verre.

Le brevet US 4,462,838 décrit des compositions polymériques contenant obligatoirement un éther d'amidon oxydé, généralement un éther hydroxypropylé de fécule de pomme de terre oxydée, et au moins un second polymère d'origine naturelle (autres dérivés d'amidons, caséine et/ou dérivés de cellulose) ou d'origine synthétique (alcool polyvinylique, polyacrylamide, polyvinylpyrolidone), le second polymère devant obligatoirement être soluble dans l'eau et être mis en oeuvre avant l'éther d'amidon oxydé lors de la préparation de l'adhésif.

Les compositions adhésives exemplifiées dans ce document sont de nature complexe et coûteuse car mettant en oeuvre, dans la majorité des cas, au moins trois polymères différents dont deux amidons modifiés, à savoir, dans un ordre précis, un amidon cationique solubilisé dans l'eau puis l'éther d'amidon oxydé obligatoirement présent.

D'autre part, les caractéristiques de tenue à l'eau et les possibilités d'élimination par eau chaude de ces compositions ne sont pas étudiées dans ce brevet US 4,462,838.

Pour sa part, le brevet US 4,675,351 préconise une association entre protéine(s) de soja solubilisée(s), polymère synthétique et amidon ou farine, en vue d'obtenir une colle d'étiquetage aqueuse présentant des caractéristiques rhéologiques adéquates, la tenue à l'eau de ladite colle étant conférée par mise en oeuvre d'oxyde de zinc.

Les adhésifs obtenus sont présentés comme facilement éliminables par lavage à l'eau chaude alcaline.

Cependant, aucun résultat n'est présenté quant à l'éventuelle conservation de l'ensemble de ces caractéristiques à l'issue du stockage de telles colles.

Par ailleurs, le procédé d'obtention de ces adhésifs apparaît relativement complexe et coûteux. En tous cas, il fait appel obligatoirement à l'utilisation significative (de 1 à 10 % en poids) d'un polymère synthétique (émulsion d'acétate de polyvinyle) et à une utilisation limitée d'amidons (15 % en poids au maximum).

Le brevet US 4,804,414 préconise la mise en oeuvre d'une résine consistant en le produit de neutralisation solubilisé d'une base alcaline et d'une composition de collophane (« rosin ») sélectionnée en vue de conférer de bonnes caractéristiques de tenue à l'eau et d'élimination en eau alcaline, à ces colles aqueuses amylacées. Il apparaît cependant qu'en pratique, pour atteindre de telles caractéristiques, l'amidon doit obligatoirement a) être un amidon dit « riche en amylopectine » ou « waxy », i.e contenant au plus 5 % en poids d'amylose et b) être combiné avec une forte proportion (40 à 50 % / poids d'amidon) de résine de collophane sélectionnée.

Plus récemment, des résines ou gommes sélectionnées à base de collophane ont également étaient associées à de la caséine et, éventuellement, à un amidon, dans la préparation de colles aqueuses d'étiquetage comme décrit dans les brevets US 5,455,066 et US 5,441,562. Mais là encore, lesdites résines ou gommes représentent, selon les exemples desdits brevets, un pourcentage très important (au moins 30-35 % en poids) de la matière sèche desdites colles. En outre, pour accéder à de bonnes propriétés, notamment rhéologiques et/ou adhésives, lesdites colles doivent contenir des taux substantiels d'alcools mono- ou polyhydriques tels que méthanol, éthylène glycol ou glycérol.

Le brevet US 5,641,349 décrit, en son EXEMPLE 31, une colle aqueuse d'étiquetage pour bouteille à base d'amidon de manioc traité selon un procédé particulier dit d'inhibition thermique.

Cet adhésif, peu biodégradable, contient une forte proportion, à savoir 50 %, exprimé en poids par rapport au poids d'amidon de manioc, d'une résine synthétique de type éthylène-acétate de vinyle (résine « EVA ») .

Les performances applicatives de la colle obtenue, notamment en termes de tenue à l'eau et d'élimination par eau chaude (alcaline), ne sont aucunement détaillées.

Plus récemment encore, la mise en oeuvre de résines « EVA » a été préconisée et exemplifiée :
- en association notamment d'oxyde de zinc, dans le cadre de la préparation de colles d'étiquetage aqueuses de thixotropie améliorée à base de caséine comme décrit dans la demande WO 01/08984, ou,
- en association notamment d'hydroxyde d'ammonium et de résine de collophane, dans le cadre de la préparation de colles d'étiquetage aqueuses à base de caséine ou d'un mélange amylacé (« starch blend » de composition non précisée) présentant une bonne tenue à l'eau froide comme décrit dans la demande WO 01/85 866.

En dernier lieu, il a été proposé, dans la demande US 2003/0064178, ou dans la demande équivalente WO 03/029378, de préparer des colles d'étiquetage aqueuses spécialement adaptées au positionnement d'étiquettes en plastique transparentes sur des containers en verre et contenant, de manière caractéristique, de la gélatine et au moins un amidon.

Il est dit, en termes très généraux, que le dit amidon peut provenir aussi bien de céréales que de tubercules, racines, légumineuses ou fruits, le terme « pois » (« pea ») étant mentionné au sein d'une très longue liste d'amidons natifs potentiellement utilisables.

Cependant, de manière très préférentielle, ces colles contiennent un amidon « riche en amylopectine » ou « waxy », celui-ci pouvant notamment consister en un amidon de maïs waxy modifié prégélatinisé, tel que le produit « DEXYLOSE^{®} I 231 » précité, lequel est mis en oeuvre dans l'ensemble des exemples de ce document.

Certains enseignements de cette demande US 2003/0064178 ou WO 03/029378 sont en outre ambigus et contradictoires dans le sens où :
- d'une part, il est dit que l'amidon « riche en amylopectine » peut être avantageusement associé à un amidon « riche en amylose » mais,
- d'autre part, les seuls amidons cités ou exemplifiés en combinaison avec ledit DEXYLOSE^{®} I 231 sont respectivement a) le produit dénommé « COLLYS^{®} BR » commercialisé par la Demanderesse et consistant en un amidon de blé réticulé ou b) le produit dénommé « SOLVICOL GP 45» commercialisé par la Société AVEBE et présenté comme une fécule de pomme de terre hydrolysée.

Force est de constater qu'aucun de ces deux produits n'est un amidon « riche en amylose » puisque le premier est issu d'amidon de blé et présente donc une teneur en amylose de l'ordre de 24 à 28 % et le second est issu de fécule de pomme de terre et présente donc une teneur en amylose de l'ordre de 20 à 23 %.

En suite de quoi aucun desdits exemples ne décrit la mise en oeuvre d'un amidon véritablement « riche en amylose ». D'autre part, l'ensemble des compositions exemplifiées contiennent, entre autres, un agent de réticulation consistant en du carbonate de zinc. En outre, il est simplement mentionné en termes généraux dans cette demande que les adhésifs préparés présentent un bon « tack » à l'état humide (« wet tack ») et de bonnes caractéristiques de clarté et transparence. Aucun détail ni chiffre n'est donné en particulier en ce qui concerne les caractéristiques de tenue à l'eau, les possibilités d'élimination par l'eau chaude ou les caractéristiques de stabilité au stockage de ces adhésifs ou de leur applicabilité pour d'autres étiquettes que celles en plastique, en particulier pour les étiquettes en papier.

Il résulte de ce qui précède qu'il n'existe pas à ce jour de moyen permettant de proposer un adhésif pour étiquetage, notamment applicable aux étiquettes à base de papier, qui réponde à l'ensemble des critères a) à i) précités.

En particulier, il n'existe pas, dans ce domaine, de moyen permettant, de manière simple, peu coûteuse et écologiquement acceptable, d'obtenir de bons compromis :
a) d'une part entre une bonne tenue à l'eau (cf. critère d) susmentionné) et des possibilités d'élimination aisée par simple lavage à l'eau chaude (cf. critères e) susmentionné) ainsi qu'une haute biodégradabilité (cf. critère h) susmentionné),
b) d'autre part entre une bonne tenue à l'eau, de bonnes propriétés rhéologiques (cf. critères a) à c) susmentionnés) ainsi qu'une bonne stabilité au stockage (cf. critère g) susmentionné).

Et il est du mérite de la Société Demanderesse d'avoir trouvé qu'un tel moyen pouvait consister en l'utilisation d'un amidon sélectionné, en l'occurrence d'un amidon de légumineuse, celui-ci présentant en outre une teneur en amylose particulière.

De manière plus précise, la présente invention a pour objet l'utilisation, dans une composition adhésive pour étiquetage exempte de gélatine, d'un amidon de légumineuse natif ou modifié présentant une teneur en amylose au moins égale à 30 % et au plus égale à 60 %, ces pourcentages étant exprimés en poids sec d'amylose par rapport au poids sec d'amidon.

Par « composition adhésive pour étiquetage », on entend toutes les compositions destinées à permettre le collage, au moins temporaire, d'une étiquette de toute nature (à base de papier et/ou d'autres matières, notamment de matières plastiques) sur un article ou un container de toute nature (en verre, en plastique, en bois ou en autres matières).

Ces compositions peuvent notamment être destinées aux procédés et/ou dispositifs d'étiquetage décrits ou exemplifiés dans l'un quelconque des documents précités de l'art antérieur, en particulier ceux permettant le collage, au moins temporaire, d'une étiquette à base de papier ou de matière plastique sur une bouteille en verre ou en plastique.

Ces compositions peuvent notamment présenter des matières sèches très diverses, inférieures ou supérieures à 40 % et des viscosités très diverses, y compris des viscosités BROOKFIELD mesurées à 25°C, inférieures à 20 000 mPa.s ou supérieures à 150 000 mPa.s.

Selon une variante avantageuse de l'invention, on utilise un amidon de légumineuse dans une colle aqueuse permettant l'étiquetage d'une bouteille en verre par une étiquette à base de papier.

Par « légumineuse » au sens de la présente invention, on entend toute plante appartenant aux familles des césalpiniacées, des mimosacées ou des papilionacées et notamment toute plante appartenant à la famille des papilionacées comme, par exemple, le pois, le haricot, la fève, la fèverole, la lentille, la luzerne, le trèfle ou le lupin.

Cette définition inclut notamment toutes les plantes décrites dans l'un quelconque des tableaux contenus dans l'article de R. HOOVER et al. intitulé « Composition, structure, functionality and chemical modification of legume starches : a review » CAN. J. PHYSIOL. PHARMACOL. Vol. 69, 1991, pp. 79-92.

De préférence, la légumineuse est choisie dans le groupe comprenant le pois, le haricot, la fève et la fèverole.

Avantageusement, il s'agit de pois, le terme « pois » étant ici considéré dans son acception la plus large et incluant en particulier :
- toutes les variétés sauvages de « pois lisse » (« smooth pea »), et
- toutes les variétés mutantes de pois présentant une teneur en amylose telle que sélectionnée et ce, quelles que soient les utilisations auxquelles on destine généralement lesdites variétés (alimentation humaine, nutrition animale et/ou autres utilisations).

Lesdites variétés mutantes sont notamment celles dénommées « mutants rug 4 » ou « mutants rug 5 » tels que décrits a) dans l'article de C-L HEYDLEY et al. intitulé « Developing novel pea starches » Proceedings of the Symposium of the Industrial Biochemistry and Biotechnology Group of the Biochemical Society, 1996, pp. 77-87 ou b) dans l'article de W.S. RATNAYAKE et al. intitulé « Pea starch : Composition, Structure and Properties - A review » Starch/Stârke, Vol. 54, 2002, pp. 217-234.

Selon une autre variante avantageuse, la légumineuse est une plante, par exemple une variété de pois ou de féverolle, donnant des graines contenant au moins 25 %, de préférence au moins 40 %, en poids d'amidon (sec/sec).

Par « amidon de légumineuse », on entend toute composition extraite et ce, de quelque manière que ce soit, d'une légumineuse et notamment d'une papilionacée, et dont la teneur en amidon est supérieure à 40 %, de préférence supérieure à 50 % et encore plus préférentiellement supérieure à 75 %, ces pourcentages étant exprimés en poids sec par rapport aux poids sec de ladite composition.

Avantageusement, cette teneur en amidon est supérieure à 90 % (sec/sec). Elle peut en particulier être supérieure à 95 %, y compris supérieure à 98 %.

Selon une autre variante, la teneur en protéines de ladite composition est inférieure à 25 %, de préférence inférieure à 10 %, ces pourcentages étant exprimés en poids sec par rapport au poids sec de ladite composition. Cette teneur peut notamment être inférieure à 5 %, y compris inférieure à 1 %. Elle peut avantageusement être comprise entre 0,1 et 0,8 % (sec/sec).

La composition utilisable comme « amidon de légumineuse » au sens de la présente invention peut par ailleurs contenir, généralement à une teneur totale inférieure à 10 % (sec/sec), différents autres constituants que amidon et protéines, en particulier des matières grasses, des substances colloïdales, des fibres, des éléments minéraux. Cette teneur totale peut notamment être inférieure à 5 %, y compris inférieure à 1 %. En ce qui concerne spécifiquement la teneur en fibres de l'amidon de légumineuse utilisable selon l'invention, cette teneur est généralement au plus égale à 8 %.De manière avantageuse cette teneur est inférieure à 4 % (sec/sec) et peut également être inférieure à 1 %.

Selon une première variante, la teneur en amylose de l'amidon contenu dans ladite composition est comprise entre 30 et 55 % (sec/sec).

La Société Demanderesse a par ailleurs trouvé que, parmi les nombreux amidons issus de variétés sauvages ou mutantes de pois et autres légumineuses, ceux présentant spécifiquement une teneur en amylose « intermédiaire », i.e au moins égale à 30 % et inférieure à 50 %, étaient tout particulièrement adaptés à un usage performant dans les adhésifs pour étiquetage et notamment les colles aqueuses destinées au collage d'étiquettes à base de papier sur des articles en verre.

Et il est remarquable de souligner, comme l'a constaté avec surprise la Demanderesse et comme il sera exemplifié par ailleurs, que des amidons de légumineuse et notamment ceux présentant une teneur en amylose « intermédiaire », pouvaient ici, y compris à l'état natif, sans avoir subi de modification quelconque :
- non seulement se substituer avantageusement et, si on le souhaitait, totalement à des amidons modifiés, notamment réticulés, issus de céréales ou de tubercules à teneurs généralement plus faibles en amylose,
- mais encore se substituer partiellement à des amidons modifiés, notamment réticulés, à hautes teneurs en amylopectine.

Ceci est d'autant plus surprenant qu'il est acquis depuis longtemps que l'amylose, polymère linéaire, ne permet pas d'obtenir ou altère grandement la stabilité au stockage des colles aqueuses amylacées.

L'amidon de légumineuse utilisable pour la préparation des compositions adhésives pour étiquetage conformément à l'invention peut être un amidon natif, i.e n'ayant subi aucun traitement de modification quelconque, ou avoir subi au moins un traitement de modification, de préférence choisi dans le groupe comprenant les traitements chimiques, les traitements physiques et les traitements enzymatiques.

Les traitements chimiques comprennent en particulier toutes les opérations connues d'estérification (notamment d'acétylation), d'éthérification (notamment de cationisation ou d'hydroxyalkylation), de réticulation ou d'hydrolyse par voies acide et oxydante.

Les traitements physiques comprennent en particulier toutes les opérations connues de précuisson, de cuisson, d'extrusion, d'atomisation, ou de séchage, celles connues sous les termes de « Heat Moisture Treatment » ou de « Annealing », les opérations de traitement par micro-ondes ou ultrasons, de plastification ou de granulation.

Et il est remarquable de souligner, comme l'a également constaté la Demanderesse, que l'utilisation d'amidons de légumineuse modifiés permettait de préparer des adhésifs pour étiquetage exempts de caséine et présentant cependant un comportement très proche d'adhésifs du commerce à base de caséine et ce, notamment en termes de caractéristiques adhésives, de tenue générale à l'eau et de stabilité au stockage.

Les adhésifs pour étiquetage visés par la présente invention peuvent contenir, outre au moins un amidon de légumineuse tel que défini précédemment, l'un quelconque des composants usuellement mis en oeuvre dans les adhésifs pour étiquetage du commerce et/ou préconisés dans l'un quelconque des documents de l'art antérieur précité.

De préférence, on associe un amidon de légumineuse tel que sélectionné avec, entre autres, un autre polymère d'origine naturelle, de nature polysaccharidique ou protéinique.

La présente invention a notamment pour objet l'utilisation conjointe, dans la préparation d'un adhésif pour étiquetage exempte de gélatine, d'un amidon de légumineuse tel que sélectionné et d'un polymère d'origine naturelle choisi dans le groupe comprenant les amidons, les protéines végétales, les protéines animales et les mélanges quelconques d'au moins deux quelconques de ces produits.

Comme déjà indiqué, on peut associer entre eux deux ou plus amidons de légumineuse, chacun pouvant ou non avoir été modifié. On peut également associer au moins un amidon de légumineuse à au moins un amidon autre qu'un amidon de légumineuse (par exemple issu de maïs, blé, pomme de terre, manioc ou riz), ce dernier pouvant être natif ou modifié. Selon une variante très avantageuse, l'amidon de légumineuse est associé à au moins un amidon autre qu'un amidon de légumineuse présentant une teneur en amylopectine d'au moins 80 % en poids (sec/sec), natif ou modifié, et notamment à un amidon waxy de maïs, de blé, de pomme de terre ou de riz, natif ou modifié.

De manière particulièrement performante, l'amidon de légumineuse, natif ou modifié, est associé à un amidon de maïs waxy, en particulier à un amidon de maïs waxy modifié physiquement, notamment par (pré)cuisson, atomisation ou extrusion, et éventuellement modifié chimiquement.

De tels amidons de maïs waxy prégélatinisés sont notamment commercialisés par la Société Demanderesse sous la marque DEXYLOSE^{®}.

Selon une autre variante, l'amidon de légumineuse, natif ou modifié, est associé, en présence ou non d'autres amidons, à une protéine choisie dans le groupe comprenant les protéines végétales (par exemple issues de maïs, blé, pomme de terre... ou de légumineuses), la caséine, les protéines de poisson et les mélanges quelconques d'au moins deux quelconques de ces produits.

Selon une autre variante, la composition adhésive pour étiquetage préparée selon l'invention est exempte de protéine, notamment exempte de caséine. Elle peut par ailleurs contenir, dans des proportions très variables, un produit choisi dans le groupe comprenant les agents de rhéologie, en particulier les agents plastifiants, fluidifiants, solubilisants, viscosifiants, réticulants, insolubilisants et stabilisants, les agents alcalins, les résines et gommes d'origine naturelle ou synthétique, les charges minérales, les polymères synthétiques, les agents anti-mousse, les agents de conservation et les agents de coloration.

Bien que la présente invention n'exclut pas l'utilisation d'amidon de légumineuse dans des adhésifs pour étiquetage présentant une matière sèche très élevée, y compris de 100 % environ dans le cas d'adhésifs de type « hot melt », ladite matière sèche est de préférence comprise entre 30 et 60 %, la phase liquide étant généralement aqueuse, en tout ou partie.

La Société Demanderesse a notamment constaté que la mise en oeuvre d'au moins un amidon de légumineuse conformément à l'invention permettait de préparer des adhésifs pour étiquetage répondant aux critères a) à i) précités tout en présentant une matière sèche supérieure à 40 %, i.e une matière sèche supérieure à un grand nombre de colles aqueuses à base d'amidon(s) et/ou de caséine utilisées dans la réalité industrielle, en particulier pour le collage d'étiquettes sur des articles en verre.

Cette matière sèche peut notamment être comprise entre 41 et 50 %.

De préférence, les adhésifs pour étiquetage préparés selon l'invention présentent par ailleurs une viscosité BROOKFIELD, mesurée à 25°C, comprise entre 20 000 et 150 000 mPa.s et notamment comprise entre 40 000 et 130 000mPa.s

De plus, les adhésifs pour étiquetage préparés conformément à l'invention peuvent se présenter sous forme de compositions en poudre prêtes à être dispersées dans l'eau ou de compositions liquides ou pâteuses prêtes à l'emploi.

La présente invention va être décrite de façon encore plus détaillée à l'aide des exemples qui suivent et qui ne sont aucunement limitatifs.

### EXEMPLE 1

### • COMPOSITION TEMOIN T1

On réalise une composition d'étiquetage témoin (ci-après COMPOSITION T1) à base d'amidon de maïs waxy modifié prégélatinisé DEXYLOSE^{®} I 231 et d'amidon de blé réticulé COLLYS^{®} BR

Sous agitation à 150 tours/minute et à 25°C, on disperse 276 g de DEXYLOSE^{®} I 231, 69 g de COLLYS^{®} BR et 6,9 g d'acétate d'ammonium dans 533 g d'eau du robinet.

Toujours sous agitation, on chauffe ce mélange à 72°C et on le maintient pendant 10 minutes à cette température. On ajoute 112 g d'urée puis on agite de nouveau pendant 30 minutes. On refroidit la composition obtenue à 50°C et on ajoute 3,1 g d'agent conservateur PREVENTOL^{®} D2 commercialisé par la Société BAYER.

La COMPOSITION T1 résultante présente une matière sèche (MS) d'environ 43,5 % et une viscosité initiale (viscosité BROOKFIELD - 20 tours/minute), mesurée à 25°C, de 65 000mPa.s environ. Son pH initial est de 6, 9.

Après 1 mois de stockage à 25°C, cette viscosité s'est stabilisée à une valeur de 60 000 mPa.s environ. Le pH atteint est de 7,7.

Ladite COMPOSITION T1 présente par ailleurs, à 45°C, une viscosité initiale de 47 000 mPa.s environ. Après 1 mois de stockage à 45°C, correspondant par convention à 9 mois de stockage à 25°C, cette viscosité à 45°C est montée jusqu'à une valeur de 85 000 mPa.s environ. Le pH atteint est de 8,3 soit une augmentation de l'ordre de 8, 3 - 6,9 = 1, 4 unité pH par rapport au pH initial.

### • COMPOSITIONS CONFORMES A L'INVENTION

On réalise par ailleurs des compositions d'étiquetage conformément à l'invention (ci-après désignées respectivement COMPOSITIONS 1A à 3A) selon le protocole général décrit ci-avant pour la COMPOSITION T1 témoin si ce n'est que l'on remplace l'amidon de blé réticulé COLLYS ® BR par un poids équivalent de respectivement chacun des amidons de légumineuse AMIDONS 1 à 3 décrits ci-après.
- COMPOSITION 1A : AMIDON 1 = amidon de pois natif présentant une teneur en amidon supérieure à 98 % (sec/sec), ledit amidon présentant une teneur en amylose de 35 % environ (sec/sec) et une teneur en protéines de 0,35 % environ (sec/sec).
- COMPOSITION 2A : AMIDON 2 = AMIDON 1 modifié physiquement par extrusion.
- COMPOSITION 3A : AMIDON 3 = amidon de pois modifié physiquement par cuisson sur tambour sécheur et présentant une teneur en amidon supérieure à 98 %, ledit amidon présentant une teneur en amylose de 38 % environ et une teneur en protéines de 0,20 % environ.

La COMPOSITION 1A présente initialement un pH de 7,2, une viscosité à 25°C de 75 000 mPa.s environ et une viscosité à 45°C de 54 000 mPa.s environ.

La COMPOSITION 2A présente initialement un pH de 6,6, une viscosité à 25°C de 130 000 mPa.s environ et une viscosité à 45°C de 60 000 mPa.s environ.

La COMPOSITION 3A présente initialement un pH de 6,6, une viscosité à 25 °C de 125 000 mPa.s environ et une viscosité à 45°C de 70 000 mPa.s environ.

### • TESTS DE STABILITE AU STOCKAGE

Des tests de stockage effectués pendant 1 mois à 25°C montrent globalement que les COMPOSITIONS 1A à 3A selon l'invention présentent une stabilité au stockage au moins aussi bonne que celle de la COMPOSITION T1.

Des tests de stockage effectués pendant 1 mois à 45°C (équivalant à 9 mois à 25°C) ont par ailleurs montré que les COMPOSITIONS 1A et 2A étaient globalement plus stables que la COMPOSITION T1.

Ainsi, après 1 mois de stockage à 45°C:
- la COMPOSITION 1A a présenté une viscosité de 63 000 mPa.s, relativement proche de la viscosité initiale à 45°C (54 000 mPa.s) et une augmentation de pH de l'ordre de 1 unité pH et,
- la COMPOSITION 2A a présenté une viscosité de 66 000 mPa.s, très proche de la viscosité initiale à 45°C (60 000 mPa.s) et une augmentation de pH de l'ordre de 1,2 unité pH.

### • TESTS DE MESURE DE L'ADHERENCE A SEC

Ces tests sont effectués selon le document intitulé « APPAREIL POUR LE CONTROLE DE L'ADHERENCE FIPAGO SYSTEME PKL », ledit document et ledit appareil étant fournis par STROHLEIN Instruments.

Comme indiqué dans ledit document, ledit appareil peut être utilisé pour le contrôle des colles en général conformément à la norme AFNOR T 76-501.

Dans le cas présent, on mesure, soit immédiatement après encollage d'une étiquette en papier (mesure à T0), soit 5 minutes après ledit encollage (mesure à T5), la résistance au décollement de ladite étiquette en papier.

Pour chaque mesure, l'étiquette (dimensions = 15 cm x 5 cm) est posée d'une part sur un support immobile et d'autre part sur une plaque de verre sèche et mobile, fixée au balancier de l'appareil.

Un rouleau passe sur l'étiquette réalisant l'encollage puis le balancier est libéré immédiatement (mesure à T0) ou après 5 minutes environ (mesure à T5), décollant ainsi l'étiquette du verre. L'appareil « FIPAGO-SYSTEME PKL » mesure la contrainte lors du décollement et la chiffre sur une échelle allant de 0 à 100, la valeur théorique de 100 correspondant à l'absence de décollement et la valeur 0 à un décollement total sans la moindre adhérence.

Le test de mesure de l'adhérence à sec ainsi décrit (désigné ci-après « TEST FIPAGO ») a été effectué sur la composition témoin (COMPOSITION T1) et sur les COMPOSITIONS 1A à 3A selon l'invention décrites ci-avant.

Les résultats obtenus (valeurs de 0 à 100) à T0 et T5 pour lesdites compositions sont repris ci-dessous :

| TEST FIPAGO | | |
|---|---|---|
| | T0 | T5 |
| COMPOSITION T1 | 25 | 30 |
| COMPOSITION 1A | 27 | 33 |
| COMPOSITION 2A | 28 | 30 |
| COMPOSITION 3A | 35 | 38 |

Ces résultats montrent que pour ce critère, des amidons de légumineuses peuvent avantageusement se substituer à un amidon de blé réticulé. En particulier des amidons de pois non modifiés chimiquement, voire non modifiés ni chimiquement, ni physiquement (cf. AMIDON 1 contenu dans la COMPOSITION 1A), conviennent parfaitement.

Un amidon de pois prégélatinisé sur tambour sécheur comme l'AMIDON 3 contenu dans la COMPOSITION 3A se révèle même ici significativement plus performant que l'amidon de blé réticulé.

### • TESTS DE COLLAGE SUR VERRE MOUILLE PAR DE L'EAU CONDENSEE

Ce test vise à évaluer, à température ambiante, le comportement d'une étiquette enduite de colle à tester, l'étiquette étant apposée sur une surface en verre constamment mouillée par de l'eau condensée. Ce test permet de prédire le comportement au collage, à température ambiante, d'une étiquette apposée sur une bouteille remplie, à température ambiante, avec un liquide réfrigéré (avant conditionnement final et avant séchage du joint de colle).

L'appareillage utilisé est constitué d'une plaque de verre positionnée verticalement et dont l'une des faces est refroidie à 5°C par circulation d'eau froide. Au contact de la surface froide, de la vapeur d'eau se condense sur l'autre face de la plaque de verre, cette autre face étant destinée à recevoir l'étiquette enduite de la colle à tester.

En vue de préparer l'étiquette à coller, on dépose un film de colle sur une autre plaque de verre à l'aide d'un applicateur de film.

Une étiquette de type étiquette de bière, de poids et surface connus, est apposée sur ce film de colle. On exerce une pression en passant une fois (i.e. un aller-retour) un rouleau de 800 g sur l'étiquette, de sorte à obtenir une dépose de colle de 30 g/m2 ± 10 %. On vérifie par pesée que la quantité de colle transférée correspond bien à une dépose de cet ordre. S'il le faut, on effectue plusieurs passages de rouleau pour obtenir la déposée souhaitée.

L'étiquette ainsi encollée est ensuite appliquée sur la face de la plaque de verre positionnée verticalement où se forme l'eau de condensation.

Les résultats sont exprimés en temps et représentent le temps nécessaire, exprimé en minutes, pour que l'étiquette glisse de 2 mm à partir de sa position initiale et ce, sous l'action de l'eau de condensation.

Selon le test sus-décrit, la COMPOSITION T1 (témoin) et les COMPOSITIONS 1A à 3A conformes à l'invention ont donné les résultats ci-dessous :

| | |
|---|---|
| - COMPOSITION T1 : | 30 minutes |
| - COMPOSITION 1A : | 20 minutes |
| - COMPOSITION 2A : | 90 minutes |
| - COMPOSITION 3A : | 45 minutes |

Ces résultats montrent que globalement, pour ce critère, des amidons de légumineuses peuvent tout à fait se substituer à un amidon de blé réticulé.

Les AMIDONS 2 et 3 (contenus respectivement dans les COMPOSITIONS 2A et 3A), non modifiés chimiquement mais uniquement physiquement (respectivement par extrusion et sur tambour sécheur), se révèlent ici significativement plus performants que l'amidon de blé réticulé.

Dans le cadre particulier de cet essai, la COMPOSITION 1A à base d'amidon de pois natif se révèle moins performante que la COMPOSITION T1 tout en présentant des propriétés de collage sur verre mouillé qui ne sont pas négligeables, potentiellement améliorables par ajustement qualitatif ou quantitatif des composants de l'adhésif.

### • TEST DE RESISTANCE A LA CONDENSATION

Ce test vise à évaluer la résistance à la condensation d'une étiquette collée par la colle à tester, sur une surface en verre initialement sèche mais constamment humidifiée par condensation d'eau un certain temps après le collage de l'étiquette.

Ce test permet de prédire en particulier le comportement d'une bouteille étiquetée en sortie d'un système de réfrigération.

L'appareillage et le mode opératoire utilisés sont identiques à ceux décrits précédemment pour les « TESTS DE COLLAGE SUR VERRE MOUILLE PAR L'EAU DE CONDENSATION » si ce n'est que, dans le cas présent, l'étiquette est encollée (à raison de 30 g/m2 ± 10 %) sur une plaque de verre sèche et que l'ensemble est laissé à sécher à température ambiante pendant 24 heures avant d'initier le phénomène de condensation.

Les résultats sont exprimés en temps et représentent le temps, exprimé en minutes, pour que l'étiquette, dès lors soumise à condensation, glisse de 2 mm à partir de sa position initiale.

Selon ce test, on a obtenu les résultats suivants pour la COMPOSITION T1 (témoin) et les COMPOSITIONS 1A à 3A conformes à l'invention :

| | |
|---|---|
| - COMPOSITION T1 : | 90 minutes |
| - COMPOSITION 1A : | 30 minutes |
| - COMPOSITION 2A : | 120 minutes |
| - COMPOSITION 3A : | 90 minutes |

Les mêmes conclusions générales que celles présentées pour les « TESTS DE COLLAGE SUR VERRE MOUILLE PAR L'EAU DE CONDENSATION » peuvent être faites.

### • AUTRES TESTS

La Société Demanderesse a par ailleurs constaté que les compositions adhésives selon l'invention présentaient :
- une texture « courte » devant limiter la formation de bavures ou projections lors de leur usage industriel,
- des caractéristiques organoleptiques (couleur, odeur notamment) totalement compatibles avec leur usage industriel,
- une bonne aptitude au collage d'étiquettes sur bouteilles destinées à être immergées dans de l'eau froide ou glacée,
- une faculté à être éliminées totalement de la surface d'articles en verre par de l'eau chaude (50°C) et ce, tout aussi facilement que la COMPOSITION T1.

### • CONCLUSION

Les résultats des tests décrits dans le présent EXEMPLE 1 montrent que, globalement, un amidon de légumineuse peut avantageusement être utilisé pour la préparation d'une composition adhésive pour étiquetage et ce, sans obligatoirement avoir du subir préalablement un traitement de modification chimique.

C'est notamment le cas d'amidons de légumineuse uniquement traités physiquement comme les AMIDONS 2 et 3.

Il est par ailleurs remarquable de souligner qu'un amidon de légumineuse natif, i.e. n'ayant subi aucun traitement préalable même physique comme l'AMIDON 1, permet de préparer des compositions adhésives présentant d'excellentes propriétés de stabilité au stockage et d'adhérence à sec tout en présentant des propriétés de collage sur verre mouillé et de résistance à la condensation qui, dans le cas présent, sont certes perfectibles mais aucunement négligeables.

### EXEMPLE 2

### • COMPOSITION TEMOIN T2

On réalise une composition d'étiquetage témoin (ci-après COMPOSITION T2) selon le même protocole général que celui décrit précédemment pour la COMPOSITION T1 si ce n'est que, dans le cas présent, on remplace l'amidon DEXYLOSE^{®} I 231 par un autre amidon de maïs waxy prégélatinisé, le ratio pondéral, entre ledit amidon de maïs waxy et l'amidon de blé réticulé COLLYS^{®} BR étant toujours de 4/1.

La COMPOSITION T2 présente :
- une matière sèche (MS) de 46,8 % environ,
- une viscosité, après 1 jour de stockage à 45°C, de 25 000 mPa.s environ,
- une viscosité, après 1 mois de stockage à 45°C, de 27 000 mPa.s environ.

### • COMPOSITIONS CONFORMES A L'INVENTION

On réalise par ailleurs des compositions d'étiquetage conformément à l'invention (ci-après désignées COMPOSITIONS 1B à 7B) selon des protocoles opératoires qui se distinguent de celui décrit ci-avant pour la COMPOSITION T2, par les différences respectives suivantes :
- COMPOSITION 1B : substitution de l'amidon de blé réticulé par l'AMIDON 1 décrit au niveau de l'EXEMPLE 1,
- COMPOSITION 2B : substitution de l'amidon de blé réticulé par l'AMIDON 2 décrit au niveau de l'EXEMPLE 1,
- COMPOSITION 3B : idem COMPOSITION 2B si ce n'est que l'on met en oeuvre un ratio pondéral amidon de maïs waxy prégélatinisé / AMIDON 2 de 3/2 au lieu de 4/1,
- COMPOSITION 4B : substitution de l'amidon de blé réticulé par de l'AMIDON 4, ledit AMIDON 4 étant obtenu par cationisation (taux d'azote 0,45 % environ) et réticulation (par le trimétaphosphate de sodium) de l'AMIDON 1 sus-décrit,
- COMPOSITION 5B : substitution de l'amidon de blé réticulé par de l'AMIDON 5, ledit AMIDON 5 étant obtenu par fluidification et stabilisation, en phase sèche, de l'AMIDON 1 selon les enseignements du brevet EP 1 094 082 au nom de la Demanderesse (mise en oeuvre d'acide chlorhydrique et de résine urée-formol),
- COMPOSITION 6B : substitution de l'amidon de blé réticulé par un mélange AMIDON 2 / AMIDON 4 selon un ratio pondéral 2/1, le ratio pondéral entre l'amidon de maïs waxy prégélatinisé et ledit mélange étant par ailleurs de 7/3,
- COMPOSITION 7B : substitution de l'amidon de blé réticulé par un mélange AMIDON 4 / AMIDON 6 (ratio pondéral : 1/1), ledit AMIDON 6 étant obtenu par fluidification et acétylation, en phase aqueuse, de l'AMIDON 1.

### • CARACTERISTIQUES GENERALES

Le tableau ci-après reprend pour chacune des COMPOSITIONS T2 (témoin) et 1B à 7B (selon l'invention) ainsi que pour une composition classique à base de caséine (COMPOSITION témoin T3), les valeurs de matière sèche (MS en %), de viscosité BROOKFIELD initiale mesurée à 25°C (Vi 25), de viscosité BROOKFIELD après un jour de stockage à 45°C (Vi 45) et de viscosité BROOKFIELD après 1 mois de stockage à 45°C (Vf 45), lesdites viscosités étant exprimées en milliers (10³) de mPa.s.

| | MS** | Vi 25* | Vi 45* | Vf 45* |
|---|---|---|---|---|
| COMP. T2 | 46,8 | 61 | 25 | 27 |
| COMP. T3 | 35,6 | 43 | 2,8 | 3,0 |
| COMP. 1B | 44,7 | 115 | 43,8 | 43 |
| COMP. 2B | 47,8 | 85 | 26,4 | 30 |
| COMP. 3B | 39,7 | 91 | 58 | 65 |
| COMP. 4B | 37,1 | 112 | ND | ND |
| COMP. 5B | 46,4 | 42 | ND | ND |
| COMP. 6B | 37,8 | 70 | 40 | 33 |
| COMP. 7B | 43,9 | 52 | 12 | 10 |

| | | | | |
|---|---|---|---|---|
| * en milliers de mpa.s ** en % ND : mesure non effectuée | | | | |

### • CONCLUSION

Ces résultats montrent globalement que par utilisation d'amidons de légumineuse natifs, modifiés physiquement et/ou chimiquement, ou d'associations entre de tels amidons, il est désormais possible de préparer des adhésifs pour étiquetage stables ou très stables et présentant :
- des MS très variables pouvant être inférieures ou supérieures à 40 %, y compris se situant entre 41 et 50 %,
- des viscosités très variables, par exemple des viscosités BROOKFIELD, mesurées à 25°C, comprises entre 40 000 et 130 000 mPa.s.

### EXEMPLE 3

### • TESTS DE MESURE DE L'ADHERENCE A SEC (« TEST FIPAGO »)

Selon le protocole décrit au niveau de l'EXEMPLE 1, on évalue l'adhérence à sec (« TEST FIPAGO ») des COMPOSITIONS 1B à 7B conformes à l'invention et des COMPOSITIONS T2 et T3 (témoins), décrites au niveau de l'EXEMPLE 2.

Les résultats obtenus (valeurs de 0 à 100) à T0 et T5 sont repris ci-dessous.

| TEST FIPAGO | | |
|---|---|---|
| | T0 | T5 |
| COMPOSITION T2 | 30 | 35 |
| COMPOSITION T3 | 25 | 60 |
| COMPOSITION 1B | 25 | 40 |
| COMPOSITION 2B | 33 | 45 |
| COMPOSITION 3B | 15 | 25 |
| COMPOSITION 4B | 35 | 50 |
| COMPOSITION 5B | 38 | 60 |
| COMPOSITION 6B | 25 | 45 |
| COMPOSITION 7B | 45 | 65 |

Ces résultats confirment globalement que, pour le critère ici étudié, on peut faire appel avantageusement à des amidons de légumineuses tant natifs (cf. COMPOSITION 1B) que modifiés physiquement (cf. COMPOSITION 2B) en vue de substituer l'amidon de blé réticulé.

Ces résultats montrent par ailleurs que l'on peut ici atteindre également des performances remarquables, supérieures à celles obtenues avec l'amidon de blé réticulé, par mise en oeuvre :
- d'amidon de légumineuses modifiés chimiquement, par exemple par cationisation ou stabilisation, tels que ceux contenus dans les COMPOSITIONS 4B et 5B, ou
- d'associations entre au moins deux amidons de légumineuse telles que celles contenues dans les COMPOSITIONS 6B et 7B.

Ces performances sont d'autant plus remarquables qu'elles peuvent se révéler, à T0 et/ou à T5, au moins égales si ce n'est supérieures à celles obtenues avec la COMPOSITION T3 à base de caséine.

C' est le cas ici notamment des COMPOSITIONS 5B et 7B conformes à l'invention.

### • AUTRES TESTS DE COLLAGE

On évalue les performances des COMPOSITIONS 1B à 7B selon l'invention et des COMPOSITIONS T2 et T3 (témoins) selon le protocole décrit au niveau de l'EXEMPLE 1 pour, respectivement, les « TESTS DE COLLAGE SUR VERRE MOUILLE PAR DE l'EAU CONDENSEE » (ci-après « TEST 1 ») et les « TESTS DE RESISTANCE A LA CONDENSATION » (ci-après « TEST 2 »).

Les valeurs obtenues sont reprises ci-dessous. Elles sont exprimées en minutes, étant entendu que la mention « HR » (« High Résistance ») signifie que le temps est supérieur à 24 heures, i.e. qu'au bout de 24 heures de test, l'étiquette n'a pas glissé ou a glissé de moins de 2 mm.

| | TEST 1 | TEST 2 |
|---|---|---|
| COMPOSITION T2 | 15 | 30 |
| COMPOSITION T3 | HR* | HR* |
| COMPOSITION 1B | 20 | 30 |
| COMPOSITION 2B | > 60 | 60 |
| COMPOSITION 3B | HR* | HR* |
| COMPOSITION 4B | 30 | 30 |
| COMPOSITION 5B | 35 | HR* |
| COMPOSITION 6B | HR* | HR* |
| COMPOSITION 7B | 60 | 60 |

| | | |
|---|---|---|
| HR* = durée > 24 heures | | |

Ces résultats montrent que dans le cas présent, l'ensemble des compositions conformes à l'invention (y compris la COMPOSITION 1B à base d'amidon de pois natif) sont au moins aussi performantes que la COMPOSITION TEMOIN dT2 associant un amidon de blé réticulé à l'amidon de maïs waxy prégélatinisé.

La plupart des compositions conformes à l'invention ici testées donnent des résultats significativement supérieurs à ceux obtenus avec la COMPOSITION T2 et ce, tant pour le TEST 1 que pour le TEST 2.

C'est notamment le cas des COMPOSITIONS 3B, 5B et 6B qui, de manière encore plus remarquable, permettent d'atteindre, pour au moins l'un des deux TESTS 1 et 2, voire les deux, des performances égalant celles obtenues avec la COMPOSITION T3 à base de caséine.

## Revendications

1. Utilisation, dans une composition adhésive pour étiquetage exempte de gélatine, d'un amidon de légumineuse, natif ou modifié, présentant une teneur en amylose au moins égale à 30 % et au plus égale à 60 % en poids (sec/sec).

2. Utilisation selon la revendication 1, **caractérisée par le fait que** l'amidon de légumineuse présente une teneur en amylose comprise entre 30 et 55 % en poids (sec/sec), de préférence au moins égale à 30 % et inférieure à 50 % en poids (sec/sec).

3. Utilisation selon l'une des revendications 1 et 2, **caractérisée par le fait que** l'amidon de légumineuse présente une teneur en protéines inférieure à 1% en poids (sec/sec), notamment comprise entre 0,1 et 0,8 % en poids (sec/sec).

4. Utilisation selon l'une des revendications 1 à 3, **caractérisée par le fait que** l'amidon de légumineuse a subi au moins un traitement de modification choisi dans le groupe comprenant les traitements chimiques, les traitements physiques et les traitements enzymatiques.

5. Utilisation selon l'une quelconque des revendications 1 à 4, **caractérisée par le fait que** la composition adhésive pour étiquetage est exempte de protéine, notamment exempte de caséine.

6. Utilisation selon l'une quelconque des revendications 1 à 4, **caractérisée par le fait que** la composition adhésive pour étiquetage contient un autre polymère d'origine naturelle, de nature polysaccharidique ou protéinique, de préférence choisi dans le groupe comprenant les amidons, les protéines végétales et les mélanges quelconques d'au moins deux quelconques de ces produits.

7. Utilisation selon la revendication 6, **caractérisée par le fait que** ledit polymère d'origine naturelle est choisi dans le groupe comprenant les amidons autres que les amidons de légumineuse, natifs ou modifiés, les protéines végétales et les mélanges quelconques d'au moins deux quelconques de ces produits.

8. Utilisation selon la revendication 7, **caractérisée par le fait que** ledit polymère d'origine naturelle est un amidon présentant une teneur en amylopectine d'au moins 80 % en poids (sec/sec), natif ou modifié.

9. Utilisation selon la revendication 8, **caractérisée par le fait que** l'amidon est un amidon de maïs waxy, en particulier un amidon de maïs waxy modifié physiquement, notamment par (pré)cuisson, atomisation ou extrusion.

10. Utilisation selon la revendication 6, **caractérisée par le fait que** la composition adhésive pour étiquetage contient au moins un autre amidon de légumineuse, natif ou modifié.

11. Utilisation selon l'une quelconque des revendications 1 à 10, **caractérisée par le fait que** la composition adhésive pour étiquetage présente une matière sèche comprise entre 30 et 60 %.

12. Utilisation selon l'une quelconque des revendications 1 à 10, **caractérisée par le fait que** la composition adhésive pour étiquetage présente une matière sèche supérieure à 40 %, notamment comprise entre 41 et 50 %.

13. Utilisation selon l'une quelconque des revendications 1 à 12, **caractérisée par le fait que** la composition adhésive pour étiquetage présente une viscosité BROOKFIELD, mesurée à 25°C, comprise entre 20 000 et 150 000 mPa.s, notamment comprise entre 40 000 et 130 000 mPa.s

14. Utilisation selon l'une quelconque des revendications 1 à 13, **caractérisée par le fait que** la composition adhésive est destinée au collage d'étiquettes sur des articles de verre.

15. Utilisation selon l'une quelconque des revendications 1 à 14, **caractérisée par le fait que** la composition adhésive est une composition en poudre prête à être dispersée dans l'eau ou une composition liquide ou pâteuse prête à l'emploi.

## Claims

1. The use, in a labeling adhesive composition, of a native or modified legume starch having an amylose content at least equal to 30% and at most equal to 60% by weight (dry/dry).

2. The use as claimed in claim 1 **characterized in that** the legume starch has an amylose content of between 30 and 55% by weight (dry/dry), preferably at least equal to 30% and less than 50% by weight (dry/dry).

3. The use as claimed in either of claims 1 and 2. **characterized in that** the legume starch has a protein content of less than 1% by weight (dry/dry), in particular of between 0,1 and 0,8% by weight (dry/dry).

4. The use as claimed in one of claims 1 to 3, **characterized in that** the legume starch has undergone at least one modification treatment selected from the group comprising chemical treatments, physical treatments and enzymatic treatments.

5. The use as claimed in any one of claims 1 to 4, **characterized in that** the labeling adhesive composition is free of protein, in particular free of casein.

6. The use as claimed in any one of claims I to 4, **characterized in that** the labeling adhesive composition contains another polymer of natural origin, of a polysaccharide or protein nature, preferably selected from the group comprising starches, plant proteins, animal proteins and any mixtures of at least any two of these products.

7. The use as claimed in claim 6, **characterized in that** said polymer of natural origin is selected from the group comprising starches other than native or modified legume starches, plant proteins, casein, gelatin, fish proteins and any mixtures of at least any two of these products.

8. The use as claimed in claim 7, **characterized in that** said polymer of natural origin is a native or modified starch having an amylopectin content of at least 80% by weight (dry/dry).

9. The use as claimed in claim 8, **characterized in that** the starch is a waxy maize starch, in particular a waxy maize starch which has been physically modified, in particular by (pre)cooking, spray-drying or extrusion.

10. The use as claimed in claim 6, **characterized in that** the labeling adhesive composition contains at least another native or modified legume starch.

11. The use as claimed in any one of claims 1 to 10, **characterized in that** the labelling adhesive composition has a dry solids content of between 30 and 60%.

12. The use as claimed in any one of claims 1 to 10, **characterized in that** the labeling adhesive composition has a dry solids content greater than 40%, in particular of between 41 and 50%.

13. The use as claimed in any one of claims 1 to 12, **characterized in that** the labeling adhesive composition has a BROOKFIELD viscosity, measured at 25°C, of between 20000 and 150 000 mPa.s, in particular of between 40000 and 130 000 mPa.s.

14. The use as claimed in any one of claims 1 to 13, **characterized in that** the adhesive composition is intended for sticking labels to glass articles.

15. The use as claimed in any one of claims 1 to 14, **characterized in that** the adhesive composition is a powdered composition ready to be dispersed in water or a ready-to-use liquid or pasty composition.

## Patentansprüche

1. Verwendung einer nativen oder modifizierten Hülsenfrüchtestärke, die einen Amylosegehalt von mindestens 30 Gew.-% und höchstens 60 Gew.-% (Trockensubstanz/Trockensubstanz) aufweist, in einer Klebstoffzusammensetzung zum Etikettieren.

2. Verwendung nach Anspruch 1, **dadurch gekennzeichnet, dass** die Hülsenfrüchtestärke einen Amylosegehalt von 30 bis 55 Gew.-% (Trockensubstanz/Trockensubstanz) und vorzugsweise von mindestens 30 Gew.-% und unter 50 Gew.-% (Trockensubstanz/Trockensubstanz) aufweist.

3. Verwendung nach Anspruch 1 oder 2, **dadurch gekennzeichnet, dass** die Hülsenfrüchtestärke einen Proteingehalt von unter 1 Gew.-% (Trockensubstanz/Trockensubstanz) und insbesondere von 0,1 bis 0,8 Gew.-% (Trockensubstanz/Trockensubstanz) aufweist.

4. Verwendung nach einem der Ansprüche 1 bis 3, **dadurch gekennzeichnet, dass** die Hülsenfrüchtestärke wenigstens einer modifizierenden Behandlung unterworfen worden ist, die aus der Gruppe ausgewählt ist, welche chemische, physikalische und enzymatische Behandlungen umfasst.

5. Verwendung nach einem der Ansprüche 1 bis 4, **dadurch gekennzeichnet, dass** die Klebstoffzusammensetzung zum Etikettieren frei von Proteinen und insbesondere frei von Casein ist.

6. Verwendung nach einem der Ansprüche 1 bis 4, **dadurch gekennzeichnet, dass** die Klebstoffzusammensetzung zum Etikettieren ein anderes Polymer natürlichen Ursprungs mit Polysaccharid- oder Proteincharakter enthält, das vorzugsweise aus der Gruppe ausgewählt ist, die Stärke, pflanzliche und tierische Proteine und beliebige Gemische aus mindestens zwei dieser Produkte umfasst.

7. Verwendung nach Anspruch 6, **dadurch gekennzeichnet, dass** das Polymer natürlichen Ursprungs aus der Gruppe ausgewählt ist, welche die anderen Stärken als die nativen oder modifizierten Hülsenfrüchtestärken, pflanzliche Proteine, Casein, Gelatine, Fischproteine und beliebige Gemische aus mindestens zwei dieser Produkte umfasst.

8. Verwendung nach Anspruch 7, **dadurch gekennzeichnet, dass** das Polymer natürlichen Ursprungs eine native oder modifizierte Stärke ist, die einen Amylopektingehalt von mindestens 80 Gew.-% (Trockensubstanz/Trockensubstanz) aufweist.

9. Verwendung nach Anspruch 8, **dadurch gekennzeichnet, dass** die Stärke eine Wachsmaisstärke und speziell eine Wachsmaisstärke, die physikalisch, insbesondere durch (Vor-)Kochen, Zerstäuben oder Extrudieren, modifiziert worden ist, ist.

10. Verwendung nach Anspruch 6, **dadurch gekennzeichnet, dass** die Klebstoffzusammensetzung zum Etikettieren mindestens eine weitere native oder modifizierte Hülsenfrüchtestärke enthält.

11. Verwendung nach einem der Ansprüche 1 bis 10, **dadurch gekennzeichnet, dass** die Klebstoffzusammensetzung zum Etikettieren einen Trockensubstanzgehalt von 30 bis 60 % besitzt.

12. Verwendung nach einem der Ansprüche 1 bis 10, **dadurch gekennzeichnet, dass** die Klebstoffzusammensetzung zum Etikettieren einen Trockensubstanzgehalt von über 40 % und insbesondere von 41 bis 50 % besitzt.

13. Verwendung nach einem der Ansprüche 1 bis 12, **dadurch gekennzeichnet, dass** die bei 25 °C gemessene BROOKFIELD-Viskosität der Klebstoffzusammensetzung zum Etikettieren 20 000 bis 150 000 mPa·s und insbesondere 40 000 bis 130 000 mPa·s beträgt.

14. Verwendung nach einem der Ansprüche 1 bis 13, **dadurch gekennzeichnet, dass** die Klebstoffzusammensetzung für das Aufkleben von Etiketten auf Glasartikel vorgesehen ist.

15. Verwendung nach einem der Ansprüche 1 bis 14, **dadurch gekennzeichnet, dass** die Klebstoffzusammensetzung eine pulverförmige Zusammensetzung, die fertig ist, in Wasser dispergiert zu werden, oder eine verwendungsbereite flüssige bzw. pastöse Zusammensetzung ist.
